## Europäisches Patentamt
## European Patent Office
## Office européen des brevets

(19)

(11) Numéro de publication: **0 199 648**
**B1**

(12)

# FASCICULE DE BREVET EUROPEEN

(45) Date de publication du fascicule du brevet:
**20.12.89**

(51) Int. Cl.⁴: **B 64 G 1/28, G 05 D 1/08**

(21) Numéro de dépôt: **86400846.1**

(22) Date de dépôt: **18.04.86**

(54) Procédé et dispositif d'amortissement de nutation de satellite par commande d'orientation de masses présentant un produit d'inertie variable.

(30) Priorité: **19.04.85 FR 8506013**

(43) Date de publication de la demande:
**29.10.86 Bulletin 86/44**

(45) Mention de la délivrance du brevet:
**20.12.89 Bulletin 89/51**

(84) Etats contractants désignés:
**DE GB IT NL**

(56) Documents cités:
**EP-A- 0 076 179**
**EP-A- 0 101 333**
**BE-A- 874 523**
**DE-A- 2 537 577**
**FR-A- 2 531 547**
**US-A- 3 695 554**
**US-A- 4 272 045**

(73) Titulaire: **MATRA, 4 rue de Presbourg, F-75116 Paris (FR)**

(72) Inventeur: **Lievre, Jérôme, 7 allée du Prunier Hardy, F-92220 Bagneux (FR)**

(74) Mandataire: **Fort, Jacques et al, CABINET PLASSERAUD 84, rue d'Amsterdam, F-75009 Paris (FR)**

ACTORUM AG

## Description

L'invention concerne l'amortissement des mouvements de nutation des satellites stabilisés suivant trois axes et comportant des masses constituant pour le satellite un produit d'inertie modifiable. Elle trouve une application particulièrement importante dans la stabilisation des satellites géosynchrones ayant au moins une roue, fournissant un moment cinétique qui reste généralement dans un plan fixe par rapport à deux des axes, munis de panneaux solaires orientables, dont les vitesses de nutation restent toujours faibles lorsqu'ils sont à poste en orbite. Dans la pratique, les composantes p et r, c'est-à-dire autour des axes de roulis X et de lacet Z, des vitesses de nutation restent inférieures à $2.10^{-3\circ}$/sec. A titre d'exemple de tels satellites, on peut citer Telecom 1.

L'examen des courbes représentatives du roulis reconstitué des satellites fait apparaître des mouvements de nutation qui atteignent des valeurs appréciables à l'issue de certaines manœuvres. C'est par exemple le cas lorsqu'on repointe rapidement vers le soleil les panneaux solaires d'un satellite à la fin d'une éclipse (pendant laquelle la rotation des panneaux est arrêtée). On sait déjà amortir cette nutation en utilisant les tuyères de commande d'attitude en roulis et en lacet. Mais la consommation de combustible qui en résulte réduit la vie utile du satellite.

On sait par ailleurs qu'il est possible de commander l'orientation du satellite par dépointage temporaire de panneaux solaires normaux ou munis d'ailettes (demande de brevet EP-A-101333). Mais ce mode de commande de panneaux tournant autour d'axes alignés passant par leur centre de gravité ne permet pas toujours d'amortir la nutation.

L'invention part de la constatation qu'il est possible d'agir sur la nutation par mouvement d'au moins une masse portée par le satellite et constituant pour lui un produit d'inertie variable (cette masse pouvant notamment être constituée par l'un des panneaux solaires ou les deux, à condition que ces derniers — ou au moins l'un d'eux — présentent un mésalignement, c'est-à-dire aient un centre de gravité hors de l'axe de rotation) et que cette action est largement suffisante même pour des mésalignements tout à fait tolérables et qu'il est même difficile d'éviter sur les satellites réels: elle utilise en fait les panneaux solaires comme une roue transverse.

L'invention propose donc un procédé d'atténuation de la nutation d'un satellite portant au moins une masse constituant pour lui un produit d'inertie variable, déterminé par le rapport à deux axes orthogonaux à l'axe nord-sud, c'est-à-dire d'un satellite du genre de Telecom 1. Elle est caractérisée en ce qu'on donne à ladite masse des variations temporaires dudit produit autour de sa valeur moyenne avec une phase par rapport à la nutation telle que celle-ci soit réduite par la variation des produits d'inertie. Si le satellite comporte des panneaux solaires présentant des mésalignements, on détecte la nutation en amplitude et en phase et on impose à la vitesse de rotation des panneaux solaires des variations temporaires de part et d'autre de sa valeur moyenne avec une phase par rapport à la nutation telle que celle-ci soit réduite par la variation des produits d'inertie. L'invention propose également un dispositif permettant de mettre en oeuvre ce procédé.

L'invention sera mieux comprise à la lecture de la description qui suit d'un procédé et d'un dispositif qui en constituent un mode particulier de réalisation donné à titre d'exemple non limitatif. La description se réfère aux dessins qui l'accompagnent, dans lesquels:

la fig. 1 est un schéma de principe montrant la disposition d'un satellite et d'un des panneaux solaires qu'il porte par rapport à la Terre et au Soleil;

les figs. 2 et 3 sont des schémas montrant les moments cinétiques qui apparaissent dans la correction suivant l'invention, lorsqu'on utilise les panneaux solaires pour amortir la nutation;

la fig. 4 est un synoptique de principe d'un dispositif de mise en œuvre de l'invention;

la fig. 5 est un synoptique d'un dispositif de mise en œuvre de l'invention constituant une variante de celui de la fig. 4, permettant d'amortir la nutation par une action en roulis-lacet;

les figs. 6A et 6B sont des schémas d'une constitution possible du réseau de passage en repères satellite et du réseau de calcul des angles du synoptique de la fig. 5;

la fig. 7 est une courbe représentative de l'effet de manœuvres sur la nutation.

Avant de décrire l'invention, il est utile de rappeler quelques indications sur les phénomènes qui interviennent dans la commande d'atténuation de nutation des satellites géosynchrones.

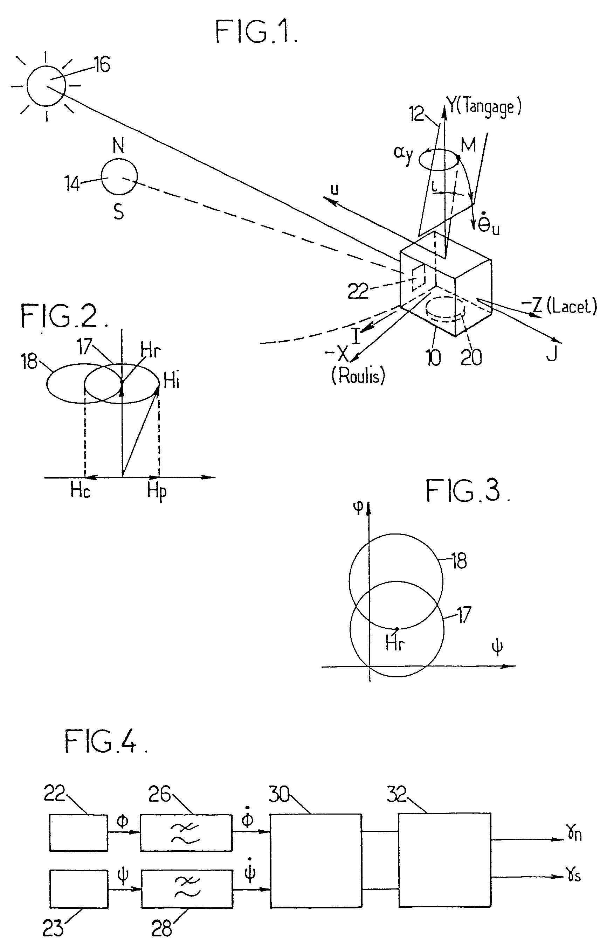

La fig. 1 montre un satellite présentant un corps 10 stabilisé par un ou des volants d'inertie internes 20 et portant des panneaux solaires dont un seul, 12, est montré. Le satellite est susceptible de prendre divers mouvements autour d'axes de roulis X, de tangage Y orienté Nord-Sud et de lacet Z dirigé vers la Terre 14. Chaque panneau 12 est muni d'un moteur destiné à le maintenir orienté face au Soleil 16, c'est-à-dire dans la direction U, par rotation autour de l'axe de tangage Y. Cette rotation s'effectue sur un tour complet en 24 h.

Soit du fait des imperfections mécaniques, soit que cela soit délibérément recherché par construction, le panneau 12 peut présenter un mésalignement qui fait que son centre de gravité M (où la masse du panneau peut être supposée concentrée) n'est pas sur l'axe Y. La ligne OM reliant le centre de gravité au pied de l'axe de rotation sur le corps 10 fait un angle i, qui restera toujours faible, avec Y. L'angle i sera généralement, pour les besoins de l'invention, compris entre quelques dixièmes de degré et 2°.

Dans ce cas, toute rotation du panneau 12 à vitesse $\dot{\alpha}_y$ autour de Y par son moteur d'entraînement (non représenté) s'accompagnera d'une rotation autour de U (situé dans le plan roulis-lacet) à vitesse $\dot{\theta}_u$:

$$\dot{\theta}_u = i \cdot \dot{\alpha}_y \qquad (1)$$

Le moment d'inertie $I_u$ dans la rotation autour de U sera toujours beaucoup plus grand que le moment d'inertie $I_y$ dans la rotation autour de Y. Dans la pratique, $I_u$ sera en général supérieur de près de deux ordres de grandeur à $I_y$. A titre d'exemple on a, sur le satellite Telecom I:

$$I_y = 7 \text{ m}^2.\text{kg}$$
$$I_u = 450 \text{ m}^2.\text{kg}$$

Si un mésalignement existe, on peut assimiler chaque panneau à une route tournant à une vitesse proportionnelle à la vitesse de rotation du panneau, mais beaucoup plus faible.

Les équations reliant entre elles les variables définissant l'attitude du corps 10 du satellite et des panneaux peuvent alors s'écrire:

$$I_s \dot{P} - R.H_y - I_p.i.\dot{\alpha}(\dot{\alpha}+Q) \cos \alpha = 0$$
$$(2)$$
$$I_s \dot{R} + P.H_y + I_p.i.\dot{\alpha}(\dot{\alpha}+Q) \sin \alpha = 0$$

où $I_s$ est le moment d'inertie du satellite complet autour d'un axe situé dans le plan XZ (roulislacet), Ip est le moment d'inertie des panneaux mis en œuvre dans une rotation autour du même axe, $H_y$ est la valeur algébrique du moment cinétique autour de l'axe de tangage Y, le terme $I_p.i.\dot{\alpha}(\dot{\alpha}+Q)$ regroupe deux composantes, l'une pour le panneau nord, l'autre pour le panneau sud, i étant le mésalignement, $\alpha$ la vitesse de rotation autour de Y et $I_p$ le moment d'inertie des panneaux mis en œuvre dans une rotation autour d'un axe du plan roulis-lacet, $\alpha$ est la position angulaire du panneau, qui change suivant l'heure solaire et est également modifiable par manœuvre, de sorte qu'elle peut s'écrire

$$\alpha = /\omega_0/\, t + \dot{\alpha}_1 t + \alpha_{ref}$$

où $/\omega_0/$ est la pulsation orbitale (1 tour/24 h), $\dot{\alpha}_1$ la vitesse de manœuvre et $\alpha_{ref}$ le biais du panneau par rapport au Soleil ($\alpha_{ref}$ étant très proche de i). P, Q et R sont les vitesses de rotation du satellite autour de X, Y et Z, issues de l'approximation aux petits angles de la dérivée des angles d'Euler.

Il semble à première vue que l'on puisse négliger, sur un satellite géosynchrone, Q qui est de 0,25°/mn, devant $\dot{\alpha}$, qui atteint 5°/mn et qu'en conséquence une action sur $\dot{\alpha}Q$ est sans intérêt pratique.

Mais — et c'est là un élément qui n'était nullement évident — les produits $\dot{\alpha}^2$ et $\dot{\alpha}Q$ n'interviennent pas du tout de la même façon dans la formule (2). En effet:
— le produit $I_p.i.\dot{\alpha}^2$ est équivalent à un couple extérieur agissant sur le corps 10 du satellite et le panneau 12 qui ont un seul degré de liberté l'un par rapport à l'autre, et il tend à déplacer le centre de nutation pendant toute la durée où $\alpha$ est non nul;
— le produit $I_p.i.Q.\dot{\alpha}$, au contraire, est équivalent à Q.Ht (Ht étant le moment cinétique transverse échangé entre le corps et le panneau dans le plan roulis-lacet, donc directement acquis sous forme de nutation).

A titre d'exemple, pour $I_p = 450 \text{ m}^2.\text{kg}$, $i = 1°$ et $\dot{\alpha} = 4,8°/\text{mn}$, les produits auront les valeurs:

$$I_p.i.\alpha^2 = 3,1.10^{-5} \text{ N.m}$$
$$(3)$$
$$I_p.i.\alpha.Q = 1,6.10^{-6} \text{ N.m}$$

ce qui conduit, pour une durée de manœuvre des panneaux de 25 sec, à des accroissements respectifs de nutation Δnut dûs aux deux termes de (3):

$$\Delta\text{nut} : 0,0018°$$
$$\Delta\text{nut} - 0,021°$$

Une autre approche mathématique possible consiste à considérer le corps et ses deux panneaux comme un ensemble de trois corps libres avec des tenseurs de liaison. Elle conduit encore à trouver un terme en $\dot{\alpha}^2$ qui semble prépondérant, mais n'a qu'un très faible effet sur la nutation, et un terme beaucoup plus faible, mettant en jeu l'accélération $\ddot{\alpha}$ des panneaux et correspondant au terme $\dot{\alpha}Q$ ci-dessus. Ce dernier terme, habituellement négligé du fait de la durée très courte pendant laquelle il existe, confère au corps un moment cinétique transverse Ht (défini ci-dessus), par l'intermédiaire de la liaison à un seul degré de liberté et donc une nutation:

$$Ht = I_p.i.\dot{\alpha}$$

On peut encore exprimer ce résultat en indiquant que ce ne sont pas les produits d'inertie qui provoquent une modification de la nutation, mais leur variation rapide dans le temps.

A partir de cette constatation, on peut déterminer les conditions dans lesquelles on peut perturber la nutation par action sur la vitesse de rotation $\dot{\alpha}$ donnée aux panneaux solaires, avec une phase appropriée.

Dans le cas d'un satellite stabilisé suivant trois axes par au moins une roue interne 20 présentant un moment cinétique résultant Hr, le mouvement de nutation s'effectue de la façon schématisée sur les fig. 2 et 3. Le moment cinétique interne Hi = Hr+Hp (Hp étant le moment cinétique des panneaux) a un mouvement de nutation autour du moment cinétique total (égal à celui des roues Hr) représenté par le cercle 17. Le mouvement de nutation tel que le voit un senseur terrestre à infrarouge 22 est indiqué par le cercle 18. La fig. 3 fait apparaître le lacet $\psi$ et le roulis $\varphi$ correspondants.

Au premier ordre, l'accroissement Δnut de nutation apporté par une rotation à vitesse $\dot{\alpha}$ pendant une durée δt sera:

$$\Delta nut = \frac{2\,(\sin\,\delta/2).I_p.i.\dot{\alpha}}{Hr}$$

avec $\delta = \delta t/2\pi Z$.

Dans ce cas où $\delta t$ est petit devant la période de nutation T, on a sensiblement:

$$\Delta nut = (Ip/It)\,\alpha.i$$

It étant le moment d'inertie total.

Dans le cas représentatif de deux panneaux présentant des biais relatifs optimaux et de

$$It = 1500\ m^2.kg$$
$$Ip = 450\ m^2.kp$$

on obtient, pour un mésalignement $i = 0,5°$, avec un angle $\alpha = 10°$.

$$\Delta nut : 0,05°.$$

De façon générale, tout mouvement de nutation se traduisant par un roulis peut être atténué par une modification de la vitesse $\dot\alpha$ des panneaux solaires, en ralentissant cette vitesse au-dessous de $\omega_0$ (voire même en arrêtant les panneaux) puis en rattrapant la position nominale par rotation à grande vitesse alors que la phase par rapport à la nutation est convenable. Les deux panneaux peuvent être commandés séquentiellement ou simultanément.

Dans tous les cas, on pourra évaluer, par la mesure de la nutation induite par des manœuvres, le plan dans lequel se trouve la ligne reliant le pied de l'axe de rotation dirigé suivant Y au centre de gravité, puis la valeur de l'angle de mésalignement i.

Le procédé suivant l'invention peut être mis en œuvre, à l'aide d'un dispositif dont l'électronique de détection peut être d'un genre connu, par exemple telle que décrite dans le document FR-A-2259389. Le dispositif décrit dans ce document est prévu pour amortir la nutation par mise en action de tuyères. Suivant l'invention au contraire, on utilisera l'effet de panneaux solaires ayant un moment cinétique non co-linéaire au moment cinétique total $H_R$ en nutation.

L'algorithme de contrôle sera alors de la forme:

$$(\gamma_n \atop \gamma_s) = \begin{pmatrix} K_1 & K_2 \\ K_3 & K_4 \end{pmatrix} \begin{pmatrix} \cos\alpha & -\sin\alpha \\ \sin\alpha & \cos\alpha \end{pmatrix} \begin{pmatrix} \Phi - \Phi_0 \\ \Psi - \Psi_0 \end{pmatrix}$$

Dans la formule ci-dessus,
$\Phi$ et $\Psi$ sont les angles d'attitude en roulis et lacet (fig. 2 et 3),
$\Phi_0$ et $\Psi_0$ sont des constantes,
$\gamma_n$ et $\gamma_s$ sont les angles de pointage du panneau nord et du panneau sud par rapport au corps du satellite,
$K_1, K_2, K_3$ et $K_4$ sont des valeurs de gain, déterminables par le calcul.

Le dispositif de contrôle pourra alors avoir la constitution montrée sous forme simplifiée en fig. 4. Les signaux représentatifs de $\Phi$ et $\Psi$, élaborés à partir des indications fournies par les senseur terrestre 22 et par un gyromètre 23, munis chacun d'un convertisseur A/N 24 ou 25 sont appliqués à des filtres 26 et 28 destinés à éliminer les composantes à haute fréquence. Dans la pratique, on peut utiliser des filtres ayant une pulsation de coupure de l'ordre de 2 $\omega$ nutation. Les signaux de sortie des filtres sont appliqués, en tant que signaux d'entrée, à un circuit 30 de changement de repères (passage de repères liés au satellite à des repères absolus). Les signaux de sortie, dans les nouveaux repères, attaquent, par l'intermédiaire l'une matrice de gain 32, des moteurs de pointage des panneaux nord et sud portés par le satellite.

Très souvent, les algorithmes de commande peuvent être très simplifiés du fait que certains termes sont du second ordre par rapport à d'autres. Les couples s'exerçant sur le corps 10 par suite de la rotation des panneaux peuvent alors s'écrire sous la forme:

$$(4) \quad \begin{pmatrix} C_I \\ C_J \end{pmatrix} = -Ip \begin{pmatrix} \delta_{in} & \delta_{is} \\ \delta_{on} & \delta_{os} \end{pmatrix} \begin{pmatrix} \dot\gamma_n.q \\ \dot\gamma_s.q \end{pmatrix}$$

Dans cette formule,
$q = (\dot\vartheta - \omega_0)\cos\varphi\cos\Psi - \dot\varphi\sin\Psi$, où $\varphi$, $\vartheta$, $\Psi$ sont les angles d'Euler et $\omega_0$ la pulsation orbitale;
Ip désigne l'inertie d'un panneau en par rapport à un axe dans le plan roulislacet;
$\gamma_n$ et $\gamma_s$ sont les angles de rotation des panneaux nord et sud, respectivement;
$\delta_{in}, \delta_{is}, \delta_{on}$ et $\delta_{os}$ sont les biais des panneaux nord et sud, dans le plan orthogonal à J (repère i) et hors de ce plan (repère o);
$C_I$ et $C_J$ sont les couples, en axes inertiels ou absolus.

Si l'on passe des axes inertiels I, J aux axes satellite X, Y, les couples appliqués autour des axes X et Z s'écrivent:

$$(5) \quad \begin{pmatrix} C_x \\ C_z \end{pmatrix} = \begin{pmatrix} \cos\alpha & -\sin\alpha \\ \sin\alpha & \cos\alpha \end{pmatrix} \begin{pmatrix} C_1 \\ C_J \end{pmatrix}$$

D'autre part, les couples de contrôle sont calculés de la manière suivante:

$$(6) \quad \begin{pmatrix} C_x \\ C_z \end{pmatrix} = -K \begin{pmatrix} \cos\alpha_0 & -\sin\alpha_0 \\ \sin\alpha_0 & \cos\alpha_0 \end{pmatrix} \begin{pmatrix} \dot\Phi \\ \dot\Psi \end{pmatrix}$$

où:
$\alpha_0$ est un retard total en phase qui peut être estimé à partir des retards dûs au filtrage et aux moteurs.

En conséquence, la matrice de gain peut aisément être déterminée à partir des formules ci-dessus et d'une détermination des coefficients soit par le calcul, soit par des essais effectués sur le satellite déjà à poste.

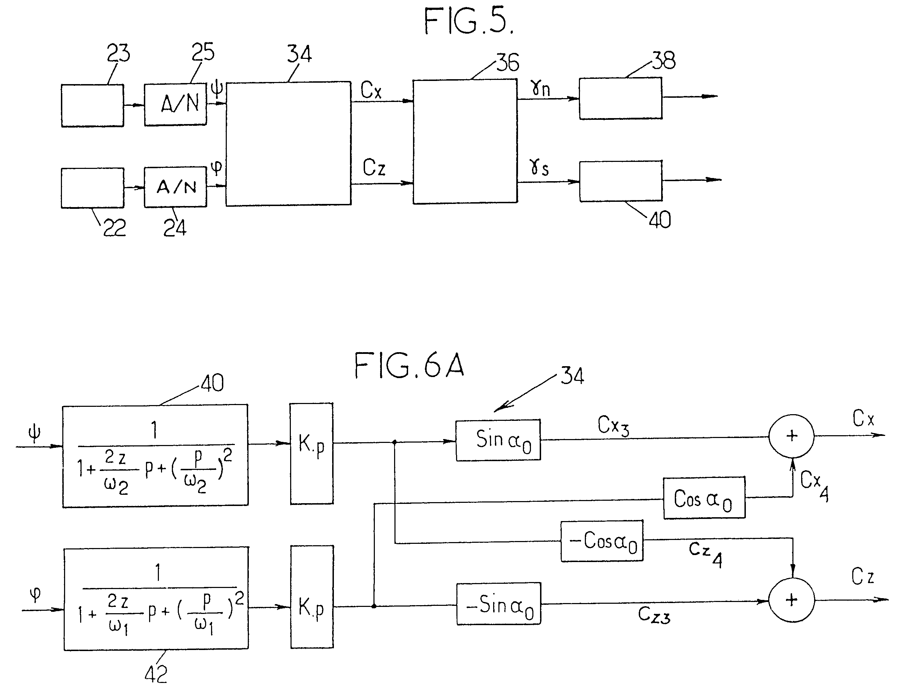

La fig. 5 est un synoptique d'un dispositif mettant en œuvre les algorithmes (4), (5) et (6) ci-dessus.

A des intervalles réguliers, de 0,1 sec par exemple, le senseur terrestre 22 et le gyromètre 23 (qui peut être remplacé par un senseur stellaire) fournissent des signaux. Ces signaux sont numérisés en 24 et 25. On dispose ainsi de signaux fournissant $\Phi$ et $\Psi$, mais affectés d'un bruit.

Un premier circuit 34 permet de déterminer les couples $C_x$ et $C_z$ à partir des signaux numérisés et de valeurs prémémorisées de $\alpha_0$, suivant la formule (6). Un second circuit, 36, permet de déterminer les vitesses de modification des pointages $\gamma_n$ et $\gamma_s$ à donner aux panneaux nord et sud. La fig. 6A montre que les signaux numérisés sont appliqués à des filtres 40 et 42 d'élimination du bruit. Les deux filtres peuvent être différents si le gyromètre 23 et le senseur terrestre 22 ont les bandes passantes différentes. Ils peuvent également être identiques. On peut utiliser notamment des filtres du second ordre ayant un algorithme du genre indiqué en fig. 6A, avec:

$$\omega 1 \simeq \omega 2 \simeq 2\omega \text{ nutation}$$
$$z \simeq 0,3.$$

Les signaux représentatifs du lacet et du roulis, fournis par les filtres 40 et 42, sont appliqués à des réseaux dérivateurs qui fournissent des signaux de vitesse de lacet et de roulis. Le gain k est sélectionné en fonction de l'inertie et à une valeur assez basse pour que les vitesses de manœuvre $\dot{\alpha}$ restent acceptables.

Les signaux représentant les vitesses sont appliqués à une matrice de circuits de multiplication et de sommation qui introduisent une avence de phase $\alpha_0$ de quelques degrés pour compenser les retards dûs aux filtres et aux organes mécaniques. Sur la fig. 6A, $Cx_3$ et $Cx_4$ désignent les deux termes de $Cx$, $Cz_3$ et $Cz_4$ les deux termes de $C_z$.

Le circuit 36 peut être un circuit câblé affecté ou sa fonction peut être remplie par un calculateur de bord incorporé au satellite et ayant d'autres rôles. Il sera câblé ou programmé pour mettre en œuvre la relation:

$$\begin{pmatrix} \dot{\alpha}_n \\ \dot{\alpha}_o \end{pmatrix} = \begin{pmatrix} -1 \\ \overline{I_p \; q} \end{pmatrix} \begin{pmatrix} \delta_{in} & \delta_{is} \\ \delta_{on} & \delta_{os} \end{pmatrix}^{-1} \begin{pmatrix} \cos \alpha & \sin \alpha \\ -\sin \alpha & \cos \alpha \end{pmatrix} \begin{pmatrix} C_x \\ C_z \end{pmatrix}$$

que l'on peut comparer à la formule (4).

Dans la nouvelle formule,
$\alpha$ désigne l'angle d'un panneau solaire autour de son axe de rotation, dans un système d'axes de référence lié au satellite,
$C_x$ et $C_z$ sont les valeurs des couples représentés par les signaux sortant du circuit 34.

Enfin, les circuits d'asservissement 38 et 40 peuvent être prévus pour donner, à l'instant N, en sortie, des consignes d'orientation angulaire $\beta_N$ de la forme:

$$\beta_N = \beta_{N-1} + \dot{\beta}_N . dt$$

dt étant le pas temporel d'échantillonnage.

Les deux valeurs de consignes $\beta_{Nn}$ et $\beta_{Ns}$ sont envoyées à la boucle d'asservissement des moteurs des panneaux nord et sud par l'intermédiaire de convertisseurs numérique/analogique non représentés ou directement appliquées à ces moteurs s'il s'agit de moteurs pas-à-pas commandés en boucle ouverte.

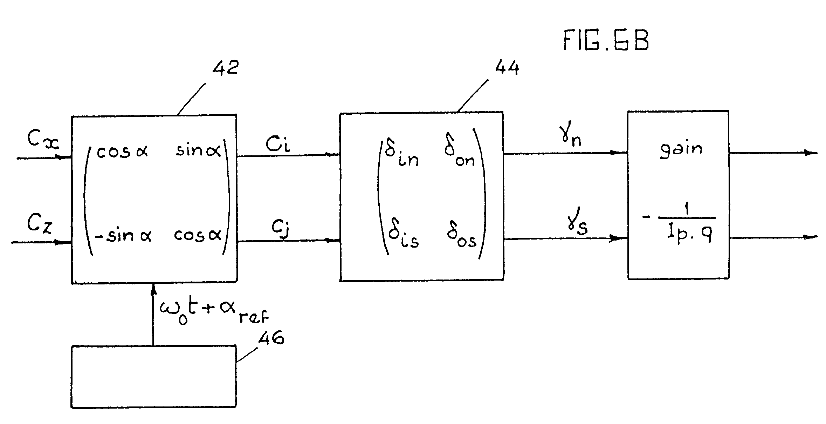

Le circuit 36 peut avoir la constitution montrée schématiquement en fig. 6B et comporter:
— un circuit 42 pour appliquer une matrice de changement d'axe de référence, en fonction de l'angle $\alpha$,
— un circuit 44 qui constitue un modèle mathématique des biais ou mésalignements des panneaux solaires,
— un circuit de multiplication par un gain prédéterminé, choisi en fonction de l'angle d'Euler q,
— un circuit 46 destiné à fournir en permanence la valeur de $\alpha$ au circuit 42, pouvant comporter une horloge et une mémoire dans laquelle est stocké $\omega_o$.

Les valeurs de $\delta_{in},...$ peuvent être stockées dans le circuit 44 au début de la mission ou peuvent être écrites dans une mémoire de 44 une fois qu'elles ont été déterminées par une station au sol, à partir de manœuvres imposées aux panneaux.

A titre d'exemple, on indiquera maintenant les données numériques correspondant au cas du satellite Telecom 1A pour lequel les mésalignements sont:

Pour le panneau nord:
$\delta_n = 0,2°$ hors du plan côté Soleil, avec $\delta_{in} = 0°$ et $\delta_{on} = + 0,2°$.

Pour le panneau sud:
$\delta_s = 0,75°$ dans le plan orthogonal à J, avec $\delta_{is} = + 0,65°$ et $\delta_{os} = 0°$.

L'inertie de chaque panneau est de
$7 \text{ m}^2.\text{kg}$ par rapport à l'axe Y passant par le centre de gravité du satellite

$\left.\begin{array}{l} 450 \text{ m}^2.\text{kg} \\ 480 \text{ m}^2.\text{kg} \end{array}\right\}$ par rapport à deux axes orthogonaux du plan XZ qui changent suivant l'heure

L'inertie du satellite avec les panneaux est de l'ordre de:

$1500 \text{ m}^2.\text{kg}$ par rapport à X
$400 \text{ m}^2.\text{kg}$ par rapport à Y
$1500 \text{ m}^2.\text{kg}$ par rapport à Z

Pour vérifier la faisabilité de la méthode, diverses manœuvres de rattrapage ont été effectuées et la perturbation correspondante de la nutation, déterminée à partir du roulis du satellite, a été mesurée. Les résultats sont donnés, pour quatorze manœuvres sucessives, sur le tableau I ci-après:

| N° de manœuvre | Panneau utilisé | Angle de la manœuvre (deg.) | Heure solaire du satellite | Accroissement de nutation (deg.) |
|---|---|---|---|---|
| 1 | Nord | 1,6 | 8h.50 | |
| 2 | Sud | 1,6 | 9h.15 | |
| 3 | Nord | 1,6 | 9h.50 | 0, |
| 4 | Sud | 1,6 | 10h.36 | −0,0035 |

| N° de manœuvre | Panneau utilisé | Angle de la manœuvre (deg.) | Heure solaire du satellite | Accroissement de nutation (deg.) |
|---|---|---|---|---|
| 5 | Nord | 4,8 | 12h.30 | 0,0055 |
| 6 | Sud | 4,8 | 13h.10 | 0,015 |
| 7 | Nord | 4,8 | 13h.50 | 0,002 |
| 8 | Sud | 4,8 | 14h.50 | 0,011 |
| 9 | Sud | 4,8 | 15h.40 | −0,003 |
| 10 | Sud | 4,8 | 16h.20 | 0,0056 |
| 11 | Sud | 4,8 | 16h.54 | 0,018 |
| 12 | Sud | 1,6 | 17h.27 | −0,004 |
| 13 | Sud | 1,6 | 17h.53 | −0,003 |
| 14 | Sud | 2, | 15h.29 | −0,015 |

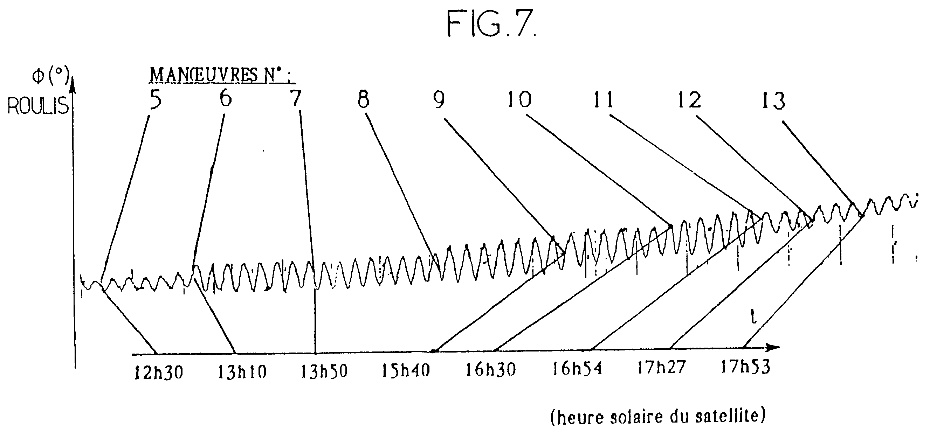

Les premières manœuvres effectuées, jusqu'à la dixième, avaient pour but de permettre le calcul du mésalignement des panneaux solaires. A partir de la onzième, les manœuvres ont été effectuées de façon à réduire la nutation. L'effet des manœuvres apparaît sur la fig. 7.

On voit que l'on a ainsi réalisé un procédé d'atténuation de la nutation utilisable sur tout satellite dont un panneau au moins tourne autour d'un axe qui ne passe pas par son centre de gravité, c'est-à-dire constitue un produit d'inertie variable pour le satellite. L'invention est également applicable sur tout satellite portant un organe orientable constituant un produit d'inertie variable pour le satellite.

Dans la pratique, il suffira d'un mésalignement des panneaux ne dépassant pas 1° pour permettre un amortissement de nutation par des manœuvres de panneaux sur les laps de temps ne dépassant pas quelques dizaines de secondes.

**Revendications**

1. Procédé d'atténuation de la nutation d'un satellite stabilisé suivant trois axes et portant un organe orientable constituant pour le satellite un produit d'inertie variable, caractérisé en ce qu'on détecte la nutation en amplitude et en phase et on impose à la vitesse de rotation de l'organe des variations temporaires de part et d'autre de sa valeur moyenne avec une phase par rapport à la nutation telle que celle-ci soit réduite par la variation des produits d'inertie.

2. Procédé d'atténuation de la nutation d'un satellite stabilisé suivant trois axes et portant des panneaux solaires, caractérisé en ce que, les panneaux solaires présentant des mésalignements, c'est-à-dire ayant un centre de gravité hors de leur axe de rotation, on détecte la nutation en amplitude et en phase et on impose à la vitesse de rotation des panneaux solaires (12) des variations temporaires de part et d'autre de sa valeur moyenne avec une phase par rapport à la nutation telle que celle-ci soit réduite par la variation des produits d'inertie.

3. Procédé selon la revendication 2, caractérisé en ce que l'on donne aux panneaux solaires (12) des mésalignements par rapport aux axes du satellite ne dépassant pas 2°.

4. Procédé selon la revendication 2, caractérisé en ce qu'un panneau (12) au moins tourne autour d'un axe qui ne passe pas par son centre de gravité.

5. Procédé selon l'une quelconque des revendications 1 à 4, caractérisé en ce qu'on mesure le roulis du satellite à l'aide d'un senseur terrestre et éventuellement le lacet à l'aide d'un gyromètre ou d'un senseur d'étoile, on en déduit le mouvement du corps du satellite dans des repères absolus et on élabore les signaux de commande de moteurs de rotation dudit organe ou desdits panneaux solaires (12).

6. Dispositif d'amortissement de la nutation sur un satellite géostationnaire stabilisé suivant trois axes par un moment cinétique interne, satellite ayant un corps et au moins un panneau solaire monté sur le corps de façon à pouvoir tourner autour d'un axe nord-sud sous l'action d'un moteur, ledit panneau présentant un biais par rapport à l'axe de rotation de façon à représenter un produit d'inertie variable, dispositif caractérisé en ce qu'il comprend:
 – des moyens (22–25) pour fournir des signaux représentatifs des mouvements de lacet et de roulis en axe satellite provoqués par la nutation,
 – des moyens (34) pour déterminer les vitesses de lacet et de roulis à partir desdits signaux,
 – des moyens (36) pour déterminer, à partir desdites vitesses, les couples en lacet et en roulis à appliquer au corps du satellite pour amortir la nutation,
 – des moyens pour calculer les couples à appliquer autour d'un axe absolu dirigé vers le Soleil et autour d'un axe orthogonal à ce dernier pour obtenir lesdits couples de lacet et de roulis, à partir de signaux représentant la position angulaire du satellite autour de l'axe nord-sud,
 – et des moyens pour déterminer le dépointage à appliquer aux panneaux solaires pour obtenir lesdits couples.

7. Dispositif selon la revendication 6, comprenant deux panneaux solaires dont les axes de rotation sont alignés suivant un axe commun nord-sud et ayant des biais différents, caractérisé en ce que les moyens de détermination du dépointage comportent un modèle mathématique des panneaux solaires pour développer les signaux individuels appliqués aux moteurs d'entraînement en rotation des panneaux pour créer des couples de réduction du lacet et du roulis.

**Patentansprüche**

1. Verfahren zur Dämpfung der Nutation eines Satelliten, der um drei Achsen stabilisiert ist und eine drehbare Einrichtung trägt, die für den Satelliten ein Trägheitsprodukt bildet, dadurch gekennzeichnet, daß man die Nutation in Größe und Phase erkennt und der Einrichtung eine Drehgeschwindigkeit mit zeitweisen Schwankungen beiderseits eines Mittelwertes mit einer Phase aufzwingt, derart, daß die Nutation durch die Veränderung der Trägheitsprodukte reduziert wird.

2. Verfahren zur Dämpfung der Nutation eines Satelliten, der um drei Achsen stabilisiert ist und Solarflächen trägt, dadurch gekennzeichnet, daß die Solarflächen eine schräge Ausrichtung aufweisen, derart, daß ihr Schwerpunkt sich außerhalb der Rotationsachse befindet und daß man die Nutation in Größe und Phase erkennt und den Solarflächen (12) eine Drehgeschwindigkeit mit zeitweisen Schwankungen beiderseits eines Mittelwerkes mit einer Phase aufzwingt, derart, daß die Nutation durch die Veränderung des Trägheitsproduktes reduziert wird.

3. Verfahren nach Anspruch 2, dadurch gekennzeichnet, daß man den Solarflächen (12) eine schräge Ausrichtung im Verhältnis zu den Satellitenachsen gibt, die 2° nicht übersteigt.

4. Verfahren nach Anspruch 2, dadurch gekennzeichnet, daß wenigstens eine Solarfläche (12) sich um eine Achse dreht, die ihren Schwerpunkt nicht enthält.

5. Verfahren nach einem der Ansprüche 1 bis 4, dadurch gekennzeichnet, daß man die Rollbewegung des Satelliten mittels eines terrestrischen Sensors und ggf. die Gierbewegung mittels eines Gyrometers oder eines Sternsensors mißt, daß man davon die Bewegung des Satellitenkörpers in einem absoluten Koordinationssystem abzieht und daß man die Steuersignale der Motoren zur Drehung der Einrichtung oder der Solarflächen (12) verarbeitet.

6. Vorrichtung zur Dämpfung der Nutation eines geostationären Satelliten, der um drei Achsen durch ein inneres kinetisches Moment stabilisiert ist, wobei der Satellit einen Körper und wenigstens eine Solarfläche aufweist, die mittels eines Motors um eine Nord-Süd-Achse drehbar am Körper angeordnet ist, wobei die Solarfläche gegenüber der Drehachse zur Einstellung eines unterschiedlichen Trägheitsproduktes schräg ausgerichtet ist, dadurch gekennzeichnet, daß die Vorrichtung

– Einrichtungen (22–25) zur Lieferung von Signalen, die die durch die Nutation hervorgerufenen Gier- und Rollbewegungen in der Satellitenachse repräsentieren,

– Einrichtungen (34) zur Bestimmung der Geschwindigkeiten der Gier- und Rollbwegung auf der Grundlage der Signale,

– Einrichtungen (36) zur Bestimmung der Drehmomente in der Gier- und Rollachse auf der Grundlage der Geschwindigkeiten, wobei die Drehmomente auf den Satellitenkörper zur Dämpfung der Nutation ausgeübt werden,

– Einrichtungen zur Berechnung der Drehmomente, um eine absolute, gegen die Sonne gerichtete Achse und um eine dazu senkrechte Achse, um die Drehmomente um die Gier- und Rollachse auf der Grundlage des die winkelförmige Stellung des Satelliten um die Nord-Süd-Achse zu erhalten, und

– Einrichtungen zur Bestimmung der Winkelabweichung aufweist, welche zur Erzeugung der Drehmomente auf die Solarflächen ausgeübt wird.

7. Vorrichtung nach Anspruch 6 mit zwei Solarflächen, deren Rotationsachsen um eine gemeinsame Nord-Süd-Achse ausgerichtet sind und unterschiedlich abgeschrägt sind, dadurch gekennzeichnet, daß die Einrichtungen zur Bestimmung der Winkelabweichung ein mathematisches Modell für die Solarflächen aufweisen, um individuelle Signale für die Antriebsmotoren zur Drehung der Solarflächen zu entwickeln, um die Drehmomente zur Reduzierung der Gier- und Rollbewegung zu erzeugen.

**Claims**

1. A process for damping nutation of a three axis stabilized satellite which carries an angularly adjustable unit which constitutes a variable product of inertia for the satellite, characterized by the steps of detecting the amplitude and phase of the nutation and controlling the rotation speed of the unit for temporarily modifying the speed with respect to its average value with a phase with respect to the nutation which is such as to reduce the amount of nutation through the variation of the products of inertia.

2. Process for damping nutation of a three axis stabilized satellite which carries solar arrays, characterzied in that, the solar arrays having misalignments, i.e. having a center of gravity out of their rotation axes, the amplitude and phase of the nutation are detected and the rotation speeds of the solar arrays (12) are controlled for temporarily modifying the speed thereof with respect to its average value with a phase with respect to the nutation which is such as to reduce the amount of nutation through the variation of the products of inertia.

3. Process according to claim 3, characterized in that the solar arrays (12) are given misalignments with respect to the axes of the satellite which do not exceed 2°.

4. Process according to claim 2, characterized in that one at least of the arrays (12) rotates about an axis which does not pass through its center of gravity.

5. Process according to any one of claims 1–4, characterized by the steps of measuring the amount of roll of the satellite with an Earth sensor and possibly the amount of yaw with a gyrometer or a star sensor, computing the motion of the satellite body within inertial references and determining the control signals of motors for rotating said unit or said solar arrays (12).

6. Device for damping the nutation of a geostationary satellite which is stabilized around three axes by an internal angular momentum, the satellite having a body and at least one solar array carried by the body so as to be rotatable about a North-South axis under the action of a motor, said array having a bias with respect to the rotation axis so as to exhibit a variable product of inertia, the device being characterized in that it comprises:

– means (22–25) for delivering signals representative of yaw and roll movements about satellite axes caused by nutation,

– means (34) for deriving the yaw and roll rates from said signals,

– means (36) for determining, from said rates, yaw and roll torques to be applied to the satellite body for damping nutation,

– means for computing the torques to be applied about a Sun-directed absolute axis and about an axis orthogonal thereto for obtaining said yaw and roll torques, from signals representing the angular position of the satellite about the North-South axis,

– and means for determining the depointing angle to be applied to the solar arrays for developing said torques.

7. Device according to claim 6, comprising two solar arrays whose rotation axes are aligned along a common North-South axis and having different biases, characterized in that the means for determining the depointing angle include a mathematical model of the solar arrays for developing individual signals applied to motors for rotational driving of the arrays for generating torques which reduce the amount of yaw and roll.

# FIG.1.

# FIG.2.

# FIG.3.

# FIG.4.

EP 0199648 B1

# FIG.5.

# FIG.6A

FIG.6B

# FIG.7.

(heure solaire du satellite)

EP 0199648 B1